# EUROPEAN PATENT SPECIFICATION

(11) **EP 2 665 992 B1**
(45) Date of publication and mention of the grant of the patent: **27.05.2015**
(21) Application number: 11700427.5
(22) Date of filing: 17.01.2011
(51) Int. Cl.: G01D 11/28, G01D 13/28, G01P 1/08, G01P 1/07

(54) **INDICATOR SHAFT**
INDIKATORWELLE
TIGE D'INDICATEUR

(43) Date of publication of application: 27.11.2013
(73) Proprietor: Juken Swiss Technology AG, 2540 Grenchen (CH)
(72) Inventor: JONES, Peter, CH-6828 Balemna (CH); DREISBACH, Olaf, 2606 Corgémont (CH); GOBELI, Nicola, CH-4500 Solothurn (CH)
(74) Representative: Veni Swiss & European Patent Attorneys
(86) International application number: PCT/EP2011/050547
(87) International publication number: WO 2012/097865

(56) References cited:
- EP-A2- 1 371 522
- WO-A2-2008/063633
- JP-A- 9 101 182
- US-A- 5 603 283
- US-A1- 2002 001 185

## Description

### TECHNICAL FIELD

The present invention relates to an indicator shaft for a rotatable and illuminable pointer. The indicator shaft can be used, in particular, in miniature stepper motors for instance for automotive instrumentation applications. The invention likewise relates to an assembly comprising the indicator shaft.

### BACKGROUND OF THE INVENTION

Indicator shafts can be used for instance in miniature stepper motors for many purposes, such as automotive instrumentation applications. Stepper motors (or step motors) are brushless, synchronous electric motors that can divide a full rotation into a large number of steps. The motor's position can be controlled precisely without any feedback mechanism, as long as the motor is carefully sized to the application.

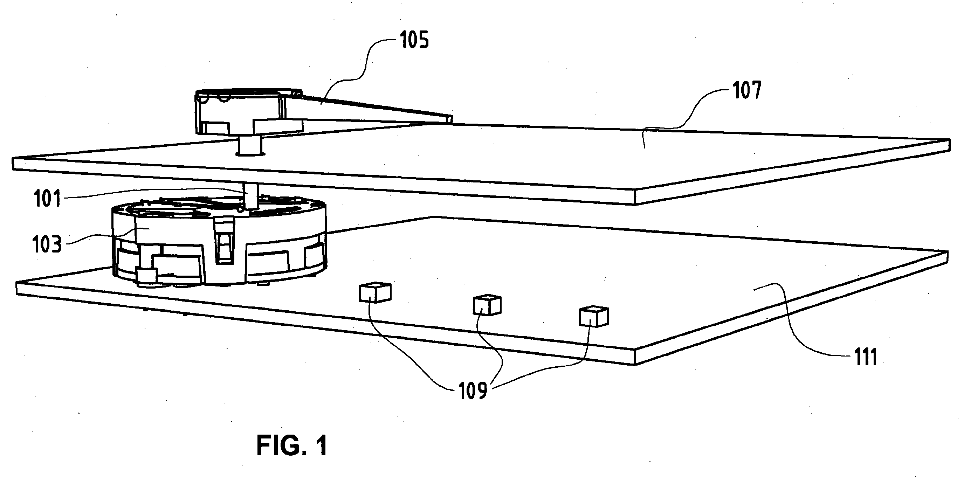

Referring to Figure 1, an indicator shaft 101 within a stepper motor 103 is used to rotate a pointer 105 in both directions in speedometers, revolution counters, fuel indicators and temperature indicators. Each pointer 105, situated over a graduated dial, will indicate the current value, which during day time will be perfectly visible to the driver.

In poor ambient light conditions or when driving by night the pointer 105 and dial assembly must be illuminated to ensure the driver's correct interpretation. To ensure the homogeneous illumination of the pointer 105 over its entire range of travel, a transparent shaft 101 is preferred using only one centered light-emitting diode (LED). The cluster dial 107 will be illuminated by several LEDs 109 situated on various printed circuit board (PCB) 111 locations. All of the illumination is designed so that the driver's view and interpretation of the instruments is as clear as possible. However, as the LED illuminates the pointer 105 through the shaft 101, in current solutions the shaft 101 radiates unwanted stray light from the exposed shaft 101 and thereby disturbs the cluster illumination.

Another problem of the current indicator shafts is related to the mounting of the pointer 105 to one end of the shaft 101. If for any reason the pointer 105 on a conventional plastic shaft has to be removed during the production of the cluster, the motor 103 including the shaft 101 must be replaced due to inferior holding torque of the pointer 105 after first use and scratches on the shaft 101. The pointer insertion on a scratched used plastic shaft will cause the loss of holding torque which is necessary to guarantee the required holding of the pointer 105 onto the shaft 101.

US 2002/001185 relates to an indicating instrument, in particular for a vehicle, having a pointer which is connected in a way fixed in terms of rotation to a pointer shaft and can be driven by a pointer shaft, a pointer illumination and a dial. The invention is based on the problem of designing an indicating instrument that is particularly simple and can be read satisfactorily. At the same time, the installation space for the indicating instrument is to be reduced. According to US 2002/001185 the dial is translucent and the pointer is arranged on the rear of the dial, on the opposite side from a viewer. The cover plate which is necessary according to the prior art can therefore be dispensed with, owing to the arrangement of the pointer in a protected position behind the dial.

EP 1371522 discloses an analog pointer instrument that has a pointer device mounted on a rotatable shaft, an arrangement with which a light beam can be coupled out from a source and into the pointer device, a reflection element that deflects the light beam and a scale on which the deflected light beam causes a light appearance that forms an illuminated pointer. The light beam is passed through the shaft in free space.

It is the aim of the present invention to provide an indicator shaft that overcomes the above-identified problems.

### SUMMARY OF THE INVENTION

According to a first aspect of the invention, an assembly is provided as recited in claim 1.

By choosing the material of the sleeve correctly, the proposed assembly offers the advantage that the encased shaft prevents any unwanted light from escaping through the side walls (parallel to the axis) of the shaft and therefore does not disturb the cluster illumination. Furthermore, the sleeve also allows the pointer to be seated onto the shaft assembly and removed from the shaft assembly many times without any adverse effect on the retention force between the shaft assembly and the pointer. In other words, the sleeve can withstand several insertions and withdrawals of the pointer without losing any of its retention force.

According to a second aspect of the invention, a motor assembly is provided as recited in claim 14.

Other aspects of the invention are recited in the dependent claims attached hereto.

### BRIEF DESCRIPTION OF THE DRAWINGS

Other features and advantages of the invention will become apparent from the following description of non-limiting exemplary embodiments, with reference to the appended drawings, in which:
- Figure 1 is a perspective view showing a stepper motor including an indicator shaft together with a PCB and a cluster dial;
- Figure 2 is a cut view of an indicator shaft assembly in accordance with a first embodiment of the present invention;
- Figure 3 is a perspective view of an indicator shaft assembly in accordance with the first embodiment of the present invention;
- Figure 4 is a side view showing a stepper motor including the indicator shaft according to the first embodiment of the invention together with an LED and a pointer; and
- Figure 5 is a side view of a pointer where the pointer forms the enclosing element in accordance with a second embodiment of the present invention.

### DETAILED DESCRIPTION OF EMBODIMENTS OF THE INVENTION

Some embodiments of the present invention will be described in the following in more detail with reference to the attached figures. The embodiments of the present invention are described in the context of stepper motors, although the invention is not limited to the stepper motors.

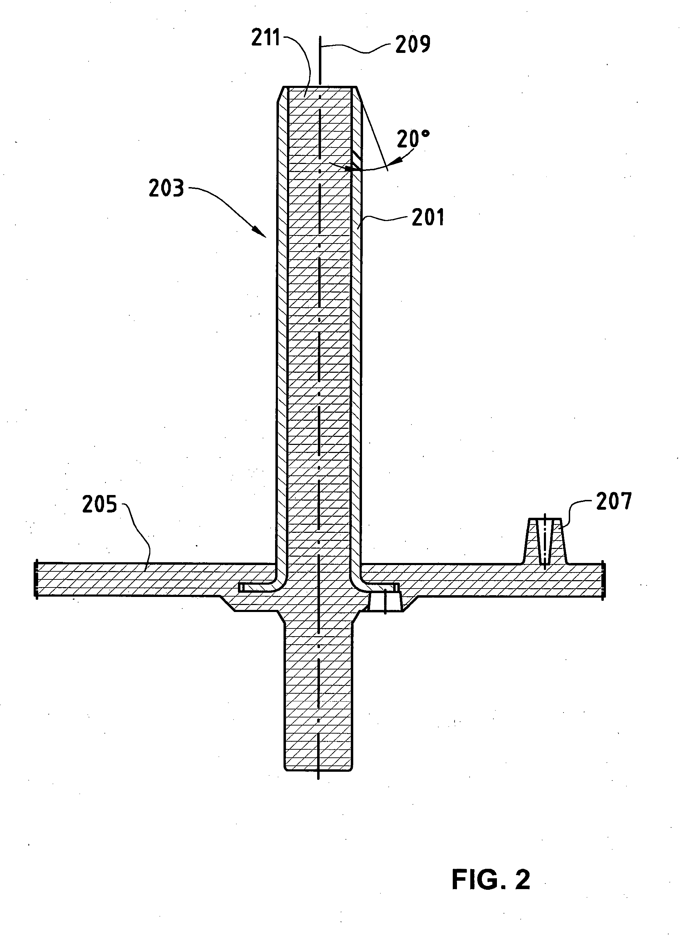

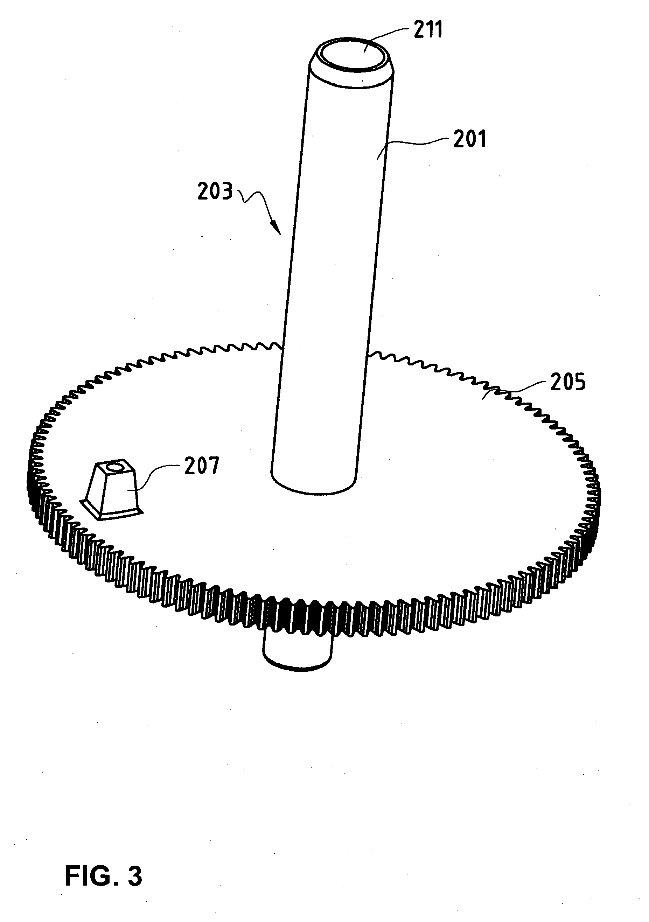

The present invention is based on an idea that a traditional transparent or translucent indicator shaft 101 is at least partly encased in a tube or enclosing element 201 that is arranged to reduce any stray light or block any stray light, and therefore does not disturb the cluster illumination. Thus, an indicator shaft assembly 203 is obtained according to the first embodiment of the present invention as shown in the example of Figures 2 and 3. Figures 2 and 3 show the indicator shaft assembly 203 with an over-moulded drive wheel 205 and a stop post 207. The drive wheel is arranged to mesh with another wheel in the stepper motor in order to rotate the indicator shaft assembly 203 about the shaft axis 209. The shaft axis 209 is parallel to the enclosing element 201, a casing, sleeve or light shielding element. Also shown on the drive wheel 205 is the stop element 207 the function of which is to limit the rotation of the indicator shaft 203 to 320 degrees.

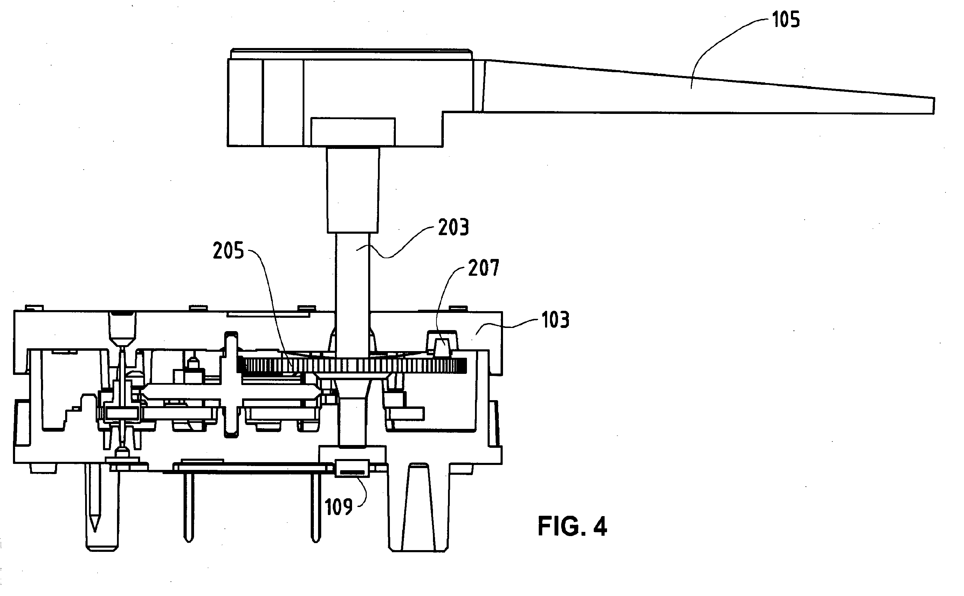

Figure 4 shows the indicator shaft assembly 203 together with the stepper motor 103. In this figure the pointer 105 is in place, i.e. it is seated on one end of the indicator shaft assembly 203. On the opposite end of the indicator shaft assembly 203 there is shown a light source 109, such as an LED. Once illuminated, the light is arranged to propagate through the indicator shaft 211 to the pointer 105. The indicator shaft or transparent assembly core 211 of the indicator shaft assembly 203 permits the light to flow from the LED 109 at the bottom to the pointer 105 at the top. The encased core 211 prevents any stray light from interfering with the surrounding illumination.

The material used to encase the core 211 of the indicator shaft assembly 203 is advantageously flexible, for instance a soft metal. Understood here by flexible material is a material, such as steel or brass, that can be shaped or cold formed. The flexibility is preferable in order to be able to cold form one end of the casing 201 to give a firm hold within the drive wheel as shown in Figure 2. As shown, the end of the casing 201 that is fixed to the drive wheel 205 is bent, in this example to a 90 degree angle.

In order to increase the light propagation in the indicator shaft assembly 203, the casing 201 is plated inside and out with another material, such as nickel, that reflects the light well. The coating of the casing 201 in this way has the following advantages. First, it improves the appearance of the shaft assembly 203. Second, a better shaft protection can be obtained, and third, it is easier to coat all over without the need to mask off certain parts. But of course it would be possible to coat only the internal surface of the casing 201.

The pointer 105 which fits onto the indicator shaft assembly 203 has high push-on and pull-off forces, preferably over 100 N. To facilitate the insertion of the pointer 105, the top of the casing can be tapered, for instance to a 20 degree angle as shown in Figure 2. In this example only the casing is tapered.

Another major benefit of the casing 201 is the removal and insertion of the pointer 105. If for any reason the pointer 105 (on a traditional plastic shaft) has to be removed during the production of the cluster, the motor including the shaft 101 must be replaced due to inferior holding torque of the pointer 105 after first use and scratches on the shaft 101. The pointer insertion on a scratched used plastic shaft will cause the loss of holding torque which is necessary to guarantee the required holding of the pointer 105 onto the shaft 101. The casing 201 however can withstand several insertions and withdrawals without losing any of its retention force.

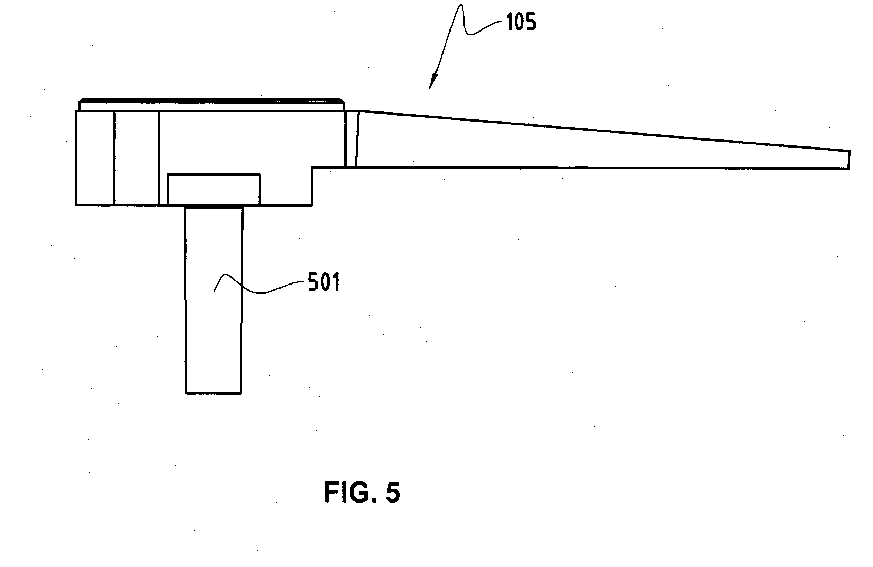

In the second embodiment illustrated in Figure 5, part of the pointer 105 forms the indicator shaft casing 501. In this embodiment the pointer 105 can be integral with the casing 501, forming one single element. In this case the casing 501 formed by the pointer 105 can be connected to the drive wheel 205 so that a firm hold within the drive wheel 205 can be obtained. The same materials can be used for the casing as in the first embodiment.

While the invention has been illustrated and described in detail in the drawings and foregoing description, such illustration and description are to be considered illustrative or exemplary and not restrictive, the invention being not limited to the disclosed embodiments. Other embodiments and variants are understood, and can be achieved by those skilled in the art when carrying out the claimed invention, based on a study of the drawings, the disclosure and the appended claims. For instance the casing 201 can simply be a specific paint which can be impregnated with specific particles, this paint advantageously having good light reflecting properties. Also the shaft core does not have to be completely encased as long as the desired effect can be obtained with the casing 201.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. An assembly comprising a shaft assembly (203) and a rotatable and illuminable pointer (105), the shaft assembly (203) comprising a light conveying indicator shaft (211) and a sleeve (201, 501), wherein:
• the shaft assembly (203) is arranged to allow light to propagate longitudinally through the indicator shaft (211) of the shaft assembly (203);
• the shaft assembly (203) is arranged to be rotated about the shaft axis (209); and
• one end of the shaft assembly (203) is arranged for the pointer (105),
wherein the sleeve (201, 501) substantially encloses the indicator shaft (211) and is arranged to prevent light from propagating through the shaft assembly walls parallel to the shaft axis (209), the assembly being **characterised in that** the pointer is configured to be removably seated on one end of the shaft assembly (203), around the sleeve (201, 501).

2. An assembly according to claim 1, wherein the sleeve (201, 501) is at least partly made of malleable metal.

3. An assembly according to any one of the preceding claims, wherein the sleeve (201, 501) is at least partly made of steel or brass

4. An assembly according to any one of the preceding claims, wherein the sleeve (201, 501) is coated inside and out with a coating layer arranged to reflect light.

5. An assembly according to claim 4, wherein the coating layer is a nickel coating.

6. An assembly according to any one of the preceding claims, wherein the indicator shaft is made of transparent or translucent plastic.

7. An assembly according to any one of the preceding claims, further comprising a drive wheel (205) and wherein the sleeve (201, 501) is arranged to be firmly fixed to the drive wheel (205).

8. An assembly according to claim 7, wherein the end of the sleeve (201, 501) that is fixed to the drive wheel (205) is bent in the drive wheel (205) to a substantially 90 degree angle.

9. An assembly according to any one of claims 7 to 8, wherein the sleeve (201, 501) extends from the drive wheel (205) to the end arranged for the pointer (105).

10. An assembly according to any one of the preceding claims, wherein the sleeve (201) is not integral with the pointer (105).

11. An assembly according to any one of the preceding claims, wherein the end of the shaft assembly (203) that is arranged for the pointer (105) is tapered.

12. An assembly according to claim 11, wherein only the sleeve (201) is tapered.

13. An assembly according to any one of claims 1 to 9, wherein part of the pointer (105) forms the sleeve (501).

14. A motor assembly comprising the assembly according to any one of the preceding claims and further comprising:
• a stepper motor (103) arranged to rotate the assembly; and
• a light source (109) located on the second end of the shaft assembly (203) and arranged to illuminate the shaft assembly (203).

## Patentansprüche

1. Eine Anordnung, welche eine Wellenanordnung (203) und einen drehbaren und aufleuchtbaren Zeiger (105) aufweist, wobei die Wellenanordnung (203) eine lichtführende Zeigerwelle (211) und eine Hülse (201, 501) aufweist, wobei:
• die Wellenanordnung (203) derart angeordnet ist, dass sich Licht längs durch die Zeigerwelle (211) der Wellenanordnung (203) ausbreiten kann;
• die Wellenanordnung (203) drehbar um die Wellenachse (209) angeordnet ist; und
• ein Ende der Wellenanordnung (203) für den Zeiger (105) angeordnet ist,
wobei die Hülse (201, 501) die Zeigerwelle (211) im Wesentlichen umhüllt und derart angeordnet ist, um eine Ausbreitung von Licht durch die Wände der Wellenanordnung parallel zur Wellenachse (209) zu verhindern, wobei die Anordnung dadurch gegenzeichnet ist, dass der Zeiger an einem Ende der Wellenanordnung (203) um die Hülse (201, 501) abnehmbar montierbar konfiguriert ist.

2. Eine Anordnung gemäß dem Anspruch 1, wobei die Hülse (201, 501) zumindest teilweise aus einem verformbaren Metall hergestellt ist.

3. Eine Anordnung gemäß einem der vorherigen Ansprüche, wobei die Hülse (201, 501) zumindest teilweise aus Stahl oder Messing hergestellt ist.

4. Eine Anordnung gemäß einem der vorherigen Ansprüche, wobei die Hülse (201, 501) innen und außen mit einer Auskleidungsschicht überzogen ist.

5. Eine Anordnung gemäß dem Anspruch 4, wobei die Auskleidungsschicht eine Nickelschicht ist.

6. Eine Anordnung gemäß einem der vorherigen Ansprüche, wobei die Zeigerwelle aus transparentem oder lichtdurchlässigem Kunststoff hergestellt ist.

7. Eine Anordnung gemäß einem der vorherigen Ansprüche, welche ferner ein Antriebsrad (205) aufweist, wobei die Hülse (201, 501) fest am Antriebsrad (205) befestigt ist.

8. Eine Anordnung gemäß dem Anspruch 7, wobei das Ende der Hülse (201, 501), das am Antriebsrad (205) befestigt ist, im Antriebsrad (205) um einen Winkel von im Wesentlichen 90 Grad gebogen ist.

9. Eine Anordnung gemäß einem der Ansprüche 7 bis 8, wobei die Hülse (201, 501) sich vom Antriebsrad (205) bis zum für den Zeiger (105) angeordneten Ende erstreckt.

10. Eine Anordnung gemäß einem der vorherigen Ansprüche, wobei die Hülse (201) nicht mit dem Zeiger (105) integriert ist.

11. Eine Anordnung gemäß einem der vorherigen Ansprüche, wobei das Ende der Wellenanordnung (201, 501), das für den Zeiger (105) angeordnet ist, verjüngt ist.

12. Eine Anordnung gemäß dem Anspruch 11, wobei nur die Hülse (201) verjüngt ist.

13. Eine Anordnung gemäß einem der Ansprüche 1 bis 9, wobei ein Teil des Zeigers (105) die Hülse (501) bildet.

14. Eine Motoranordnung, welche die Anordnung gemäß einem der vorherigen Ansprüche, sowie:
• einen Schrittmotor (103), welcher zum Drehen der Anordnung angeordnet ist; und
• eine Lichtquelle (109), welche am zweiten Ende der Wellenanordnung (203) zum Aufleuchten der Wellenanordnung (203) angeordnet ist, aufweist.

## Revendications

1. Un assemblage comprenant un assemblage de tige (203) et un pointeur rotatif et illuminable (105), l'assemblage de tige (203) comprenant une tige d'indicateur (211) conçu pour acheminer la lumière, et un manchon (201, 501), dans lequel:
• l'assemblage de tige (203) est agencé pour permettre à la lumière de se propager longitudinalement à travers la tige d'indicateur (211) de l'assemblage de tige (203);
• l'assemblage de tige (203) est agencé pour tourner autour de l'axe de la tige (209); et
• une extrémité de l'assemblage de tige (203) est conçue pour le pointeur (105),
dans lequel le manchon (201, 501) encloisonne essentiellement la tige d'indicateur (211) et est agencé pour empêcher la lumière de propager à travers les parois de l'assemblage de tige parallèles à l'axe de tige (209), l'assemblage étant **caractérisé en ce que** le pointeur est agencé pour être placé de manière détachable sur une extrémité de l'assemblage de tige (203), autour du manchon (201, 501).

2. Un assemblage selon la revendication 1, dans lequel le manchon (201, 501) est au moins partiellement fabriqué de métal malléable.

3. Un assemblage selon l'une quelconque des revendications précédentes, dans lequel le manchon (201, 501) est au moins partiellement fabriqué d'acier ou de laiton.

4. Un assemblage selon l'une quelconque des revendications précédentes, dans lequel le manchon (201, 501) comprend une couche de revêtement à l'intérieur et à l'extérieur agencée pour refléter de la lumière.

5. Un assemblage selon la revendication 4, dans lequel la couche de revêtement est un revêtement de nickel.

6. Un assemblage selon l'une quelconque des revendications précédentes, dans lequel la tige d'indicateur est fabriquée de plastique transparent ou translucide.

7. Un assemblage selon l'une quelconque des revendications précédentes, comprenant en plus une roue d'entraînement (205) et dans lequel le manchon (201, 501) est agencé pour être fixé fermement à la roue d'entraînement (205).

8. Un assemblage selon la revendication 7, dans lequel l'extrémité du manchon (201, 501), qui est fixée à la roue d'entraînement (205), est pliée dans la roue d'entraînement (205) pour former essentiellement un angle de 90 degrés.

9. Un assemblage selon l'une quelconque des revendications 7 à 8, dans lequel le manchon (201, 501) s'étend de la roue d'entraînement (205) jusqu'à l'extrémité conçue pour le pointeur (105).

10. Un assemblage selon l'une quelconque des revendications précédentes, dans lequel le manchon (201) n'est pas solidaire avec le pointeur (105).

11. Un assemblage selon l'une quelconque des revendications précédentes, dans lequel l'extrémité de l'assemblage de tige (203), qui est conçue pour le pointeur (105) est effilée.

12. Un assemblage selon la revendication 11, dans lequel seulement le manchon (201) est effilé.

13. Un assemblage selon l'une quelconque des revendications 1 à 9, dans lequel une partie du pointeur (105) forme le manchon (501).

14. Un assemblage de moteur comprenant l'assemblage selon l'une quelconque des revendications précédentes et comprenant en plus:
• un moteur à pas (103) agencé pour tourner l'assemblage; et
• une source lumineuse (109) située à la deuxième extrémité de l'assemblage de tige (203) et agencée pour illuminer l'assemblage de tige (203).
